# EUROPÄISCHE PATENTSCHRIFT

(11) **EP 2 957 207 B1**
(45) Veröffentlichungstag und Bekanntmachung des Hinweises auf die Patenterteilung: **31.08.2016**
(21) Anmeldenummer: 15001544.4
(22) Anmeldetag: 20.05.2015
(51) Int. Cl.: A47L 9/32

(54) **HANDGRIFF FÜR EINEN STAUBSAUGER UND STAUBSAUGER MIT EINEM SOLCHEN HANDGRIFF**
HANDLE FOR A VACUUM CLEANER AND VACUUM CLEANER WITH SUCH A HANDLE
POIGNÉE D'UN ASPIRATEUR ET ASPIRATEUR DOTÉ D'UNE TELLE POIGNÉE

(30) Priorität: 17.06.2014 DE 102014108481
(43) Veröffentlichungstag der Anmeldung: 23.12.2015
(73) Patentinhaber: Miele & Cie. KG, 33332 Gütersloh (DE)
(72) Erfinder: Stork, Heiko, 32051 Herford (DE); Gerth, Volker, 33739 Bielefeld (DE); Bronold, Christian, 33332 Gütersloh (DE); Vogelsang, André, 33813 Oerlinghausen (DE)

(56) Entgegenhaltungen:
- DE-A1- 2 216 963
- DE-A1- 10 241 129
- DE-U1- 29 502 725
- DE-U1- 29 914 687
- US-A- 4 715 086

## Beschreibung

Handgriff für einen Staubsauger und Staubsauger mit einem solchen Handgriff Die Erfindung betrifft einen Handgriff für einen Staubsauger sowie Staubsauger mit einem solchen Handgriff.

Ein Handgriff für einen Staubsauger ist an sich bekannt. Bei einem Staubsauger in Form eines Bodenstaubsaugers fungiert als Handgriff ein Griffelement, das sich an einem Ende eines Saugrohrs befindet und zum Bewegen einer am anderen Ende des Saugrohrs befindlichen Bodendüse bestimmt ist, wie z.B. in US-A-4715086 gezeigt wird.

Beim Staubsaugen kann es aufgrund von Reibungselektrizität (triboelektrischer Effekt) zu einer elektrostatischen Aufladung des Verwenders des Staubsaugers kommen. Das Griffelement ist üblicherweise in Kunststoff ausgeführt und fungiert damit als Isolator, so dass eine sich aufbauende Ladung nicht kontinuierlich über das üblicherweise metallische Saugrohr und die Bodendüse abfließen und die Potentialdifferenz damit abgebaut werden kann. Die elektrostatische Aufladung kann bei einem Verwender des Staubsaugers zu einem merklichen sogenannten elektrischen Schlag führen, wenn beim Staubsaugen neben dem Handgriff auch das Saugrohr berührt wird und es damit zu einem schlagartigen Ausgleich der Potentialdifferenz kommt.

Ein solcher elektrischer Schlag ist für den Verwender des Staubsaugers unangenehm und entsprechend werden üblicherweise Vorkehrungen getroffen, mittels derer ein dafür ursächlicher Potentialunterschied vermieden wird.

Bei bisherigen Staubsaugerhandgriffen der Anmelderin wird ein Drahtbügel durch nachträgliche Montage so in den ansonsten als Spritzgießteil gefertigten Handgriff integriert, dass der Drahtbügel einerseits in elektrisch leitendem Kontakt mit dem metallischen Saugrohr steht und andererseits vom Verwender des Staubsaugers bei einer normalen Griffposition am Handgriff berührt wird. Der Drahtbügel sorgt damit für einen elektrischen Potentialausgleich zwischen Handgriff und dem üblicherweise teleskopierbaren Saugrohr (Teleskoprohr). Indem der Verwender des Staubsaugers den Drahtbügel berührt, ist auch der Verwender selbst von dem elektrischen Potentialausgleich erfasst.

Wenngleich ein solcher Staubsaugerhandgriff die Vermeidung eines ansonsten mitunter niemals ganz auszuschließenden elektrischen Schlags bereits sehr zufriedenstellend leistet, verbleiben noch fertigungstechnische Optimierungsmöglichkeiten.

Der Erfindung stellt sich somit das Problem, eine weitere Ausführungsform eines Staubsaugerhandgriffs mit Mitteln zum Potentialausgleich anzugeben, die im Hinblick auf eine vereinfachte Fertigung optimiert ist.

Erfindungsgemäß wird dieses Problem durch einen Handgriff für einen Staubsauger mit den Merkmalen des Patentanspruchs 1 gelöst. Dazu ist bei einem solchen Handgriff mit einem aus einem nichtleitenden Kunststoff in einem Spritzgussverfahren gefertigten Kernteil ein in einem Spritzgussverfahren gefertigter und mit dem Kernteil verbundener elektrischer Leiter vorgesehen, der sich von einem Griffbereich des Handgriffs bis zu einem Kontaktbereich des Handgriffs erstreckt. Ein Verwender des Staubsaugers fasst den Handgriff im Griffbereich an und kommt damit mit dem Leiter in Kontakt. In dem Kontaktbereich steht der Handgriff in Kontakt mit einem Saugrohr, so dass im Falle einer elektrostatischen Aufladung des Verwenders ein Abfluss der Ladung über den Leiter und das anschließende Saugrohr möglich ist. Der mit dem Kernteil verbundene, in einem Spritzgussverfahren hergestellte und an dem Kernteil angeformte Leiter tritt damit an die Stelle des bisherigen Drahtbügels und ist ansonsten in gleicher Weise im Sinne eines kontinuierlichen Ladungsabflusses im Falle einer sich beim Staubsaugen ergebenden elektrostatischen Aufladung des Verwenders des Staubsaugers wirksam.

Der Vorteil der Erfindung besteht in der Vermeidung des bisher notwendigen zusätzlichen Montageschritts und der damit einhergehenden zusätzlichen Montagekosten. Darüber hinaus lassen sich jetzt auch komplexere Geometrien des Leiters umsetzen.

Vorteilhafte Ausgestaltungen und Weiterbildungen der Erfindung ergeben sich aus den nachfolgenden Unteransprüchen. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Handgriffs ist auch der Leiter, genau wie das Kernteil, aus einem Kunststoff, nämlich einem elektrisch leitfähigen Kunststoff, also zum Beispiel einem elektrisch leitfähigen Polymer, gefertigt. Die Fertigung sowohl des Kernteils wie auch des Leiters aus jeweils einem Kunststoff erleichtert die sich im Zuge des Spritzgießens des Leiters ergebende Verbindung des Leiters mit dem Kernteil. Das Kernteil kann dabei aus einem im Vergleich zu dem leitfähigen Kunststoff des Leiters preiswerten Kunststoff, zum Beispiel Acrylnitril-Butadien-Styrol-Copolymerisat (Kurzzeichen ABS) gefertigt werden. Als Material für den Leiter kommt auch ein elektrisch leitfähiges ABS in Betracht.

Bei einer weiteren Ausführungsform des Handgriffs ist der Leiter aus einem farblich vom Kernteil abgesetzten Kunststoff gefertigt. Dies ermöglicht die Verwendung des Leiters als Designfeature. Die Verwendung eines farbigen oder eingefärbten Kunststoffs ist im Rahmen eines Spritzgussverfahrens ohne Weiteres möglich, zum Beispiel indem in die Spritzgussmasse entsprechende Farbpartikel eingebracht sind.

Bei einer besonderen Ausführungsform des Handgriffs weist dieser zumindest eine als Außenoberfläche oder abschnittsweise Außenoberfläche fungierende und zur Anbringung am Kernteil bestimmte Abdeckschale auf. Zum Durchtritt durch in der Abdeckschale gebildete Öffnungen weist der Leiter zumindest eine Abstellung oder mehrere Abstellungen auf. Die Abdeckschale und der Leiter mit der oder jeder Abstellung sind dabei so geformt, dass bei einer am Kernteil mit dem damit verbundenen Leiter angebrachten Abdeckschale die oder jede Abstellung mit der Außenoberfläche der Abdeckschale fluchtet. Die Abdeckschale fungiert als Grifffläche und kann im Hinblick auf eine angenehme Haptik / Ergonomie gestaltet werden. Die oder jede durch die Abdeckschale hindurchtretende Abstellung ermöglicht den elektrisch leitenden Kontakt mit der Hand des Verwenders und damit einen kontinuierlichen Ladungsabfluss im Falle einer sich beim Staubsaugen ergebenden elektrostatischen Aufladung des Verwenders des Staubsaugers.

Insgesamt ist die Erfindung auch ein Staubsauger mit einem Handgriff der hier und im Folgenden beschriebenen Art. Bei dem Staubsauger handelt es sich zum Beispiel um einen Staubsauger in einer Ausführung als Bodenstaubsauger. Ein solcher Handgriff kommt allerdings grundsätzlich auch zur Verwendung mit anderen Staubsaugertypen, also zum Beispiel einem Hand-/Stabstaubsauger, in Betracht.

Ein Ausführungsbeispiel der Erfindung ist in den Zeichnungen rein schematisch dargestellt und wird nachfolgend näher beschrieben. Einander entsprechende Gegenstände oder Elemente sind in allen Figuren mit den gleichen Bezugszeichen versehen. Das Ausführungsbeispiel ist nicht als Einschränkung der Erfindung zu verstehen. Vielmehr sind im Rahmen der vorliegenden Offenbarung durchaus auch Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie zum Beispiel Herstellungsverfahren betreffen.

Es zeigen:
- Figur 1: einen Staubsauger in einer Ausführung als Bodenstaubsauger mit einem Handgriff,
- Figur 2: eine Teil-Explosionsdarstellung eines Handgriffs mit einem Kernteil des Handgriffs und einem elektrischen Leiter,
- Figur 3: das Kernteil des Handgriffs gemäß Figur 2 mit einem daran angebrachten Leiter,
- Figur 4: einen Handgriff mit einem Kernteil gemäß Figur 3 und daran angebrachten Abdeckschalen,
- Figur 5: eine Teil-Explosionsdarstellung eines Handgriffs mit einer am Handgriff beweglichen Bürste, sowie
- Figur 6: Ablaufdiagramm eines Verfahrens zur Herstellung eines Handgriffes für einen Staubsauger.

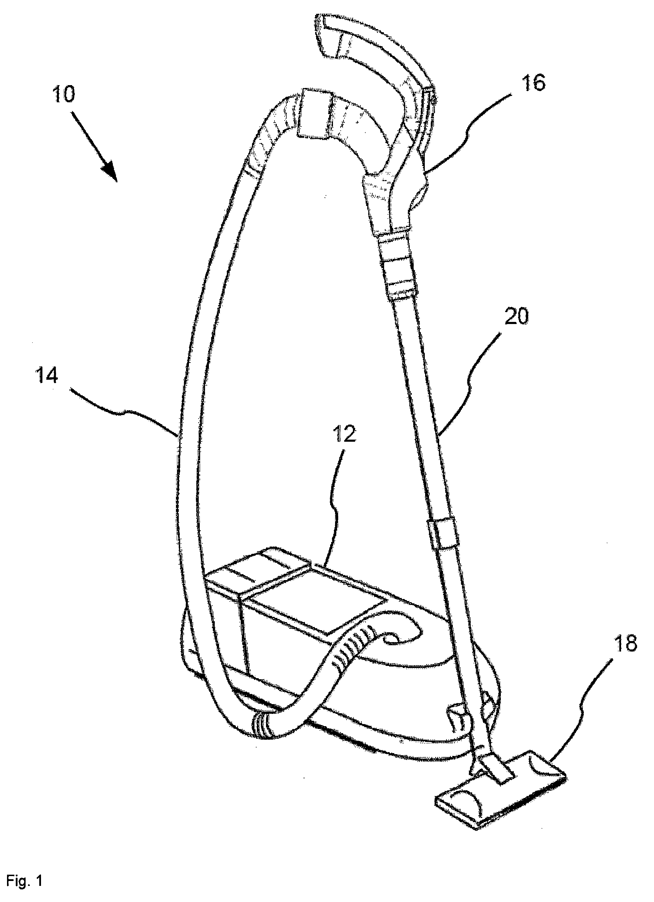

Figur 1 zeigt in einer schematisch vereinfachten Darstellung einen Staubsauger 10 in einer Ausführung als Bodenstaubsauger. Dieser umfasst in an sich bekannter Art und Weise ein Gerätegehäuse 12 mit einem darin befindlichen und nicht weiter dargestellten Saugaggregat und einem Staubraum. Ausgehend vom Gerätegehäuse 12 verläuft ein Saugschlauch 14 zu einem Handgriff 16, der zum Führen einer Bodendüse 18 bestimmt ist. Zwischen der Bodendüse 18 und dem Handgriff 16 befindet sich hier ein Saugrohr 20, nämlich bei der gezeigten Ausführungsform ein teleskopierbares Saugrohr 20.

Über den Saugschlauch 14 und das Saugrohr 20, ggf. den Saugschlauch 14, den Handgriff 16 und das Saugrohr 20, ist die Bodendüse 18 an den im Betrieb des Staubsaugers 10 im Staubraum des Gerätegehäuses 12 mittels des Saugaggregats erzeugten Unterdruck gekoppelt, so dass sich dieser auch an einem in einer Bodenfläche der Bodendüse 18 gebildeten Saugmund einstellt und damit in an sich bekannter Art und Weise das Absaugen eines jeweils zu reinigenden Untergrunds möglich ist.

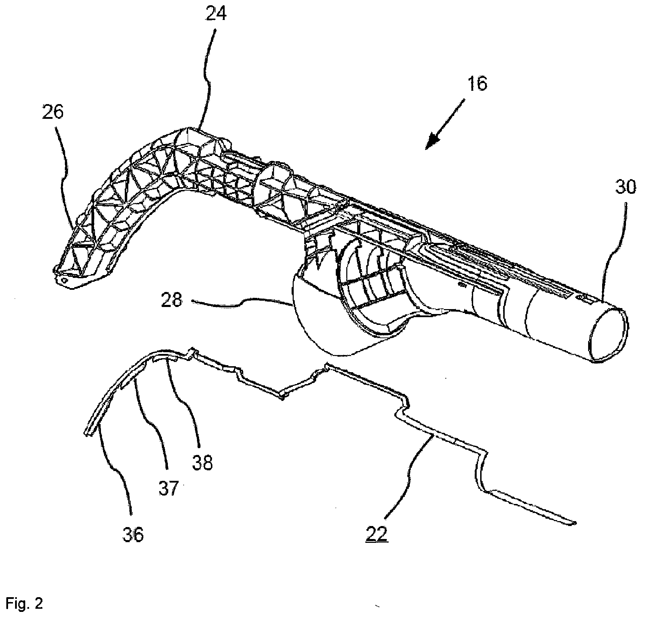

Der Handgriff 16 ist in Kunststoff ausgeführt und damit ein elektrischer Isolator. Das Saugrohr 20 ist üblicherweise metallisch und damit ein guter elektrischer Leiter. Beim Staubsaugen kann es aufgrund von Reibungselektrizität und dergleichen zu einer elektrostatischen Aufladung des Verwenders des Staubsaugers 10 kommen. Zum kontinuierlichen Ausgleich der dann resultierenden Potentialdifferenz umfasst der Handgriff 16 als Mittel zum Potentialausgleich einen Leiter 22. Dazu zeigt die Darstellung in Figur 2 den Handgriff 16 in einer Teil-Explosionsdarstellung. Danach umfasst der Handgriff 16 ein Kernteil 24 mit einem Griffbereich 26, einem Anschlussbereich 28 zum Anbringen des Saugschlauchs 14 am Handgriff 16 und einen Kontaktbereich 30 zum Verbinden des Handgriffs 16 mit dem Saugrohr 20.

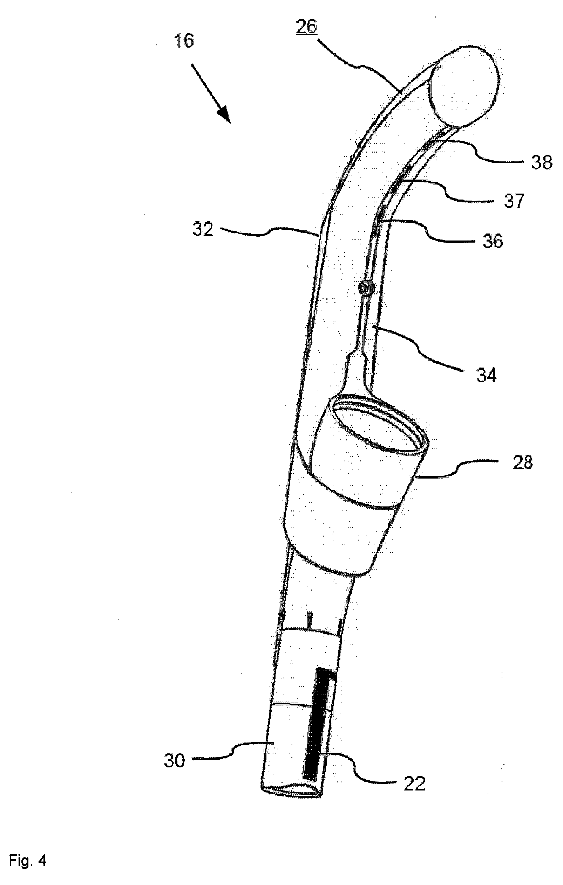

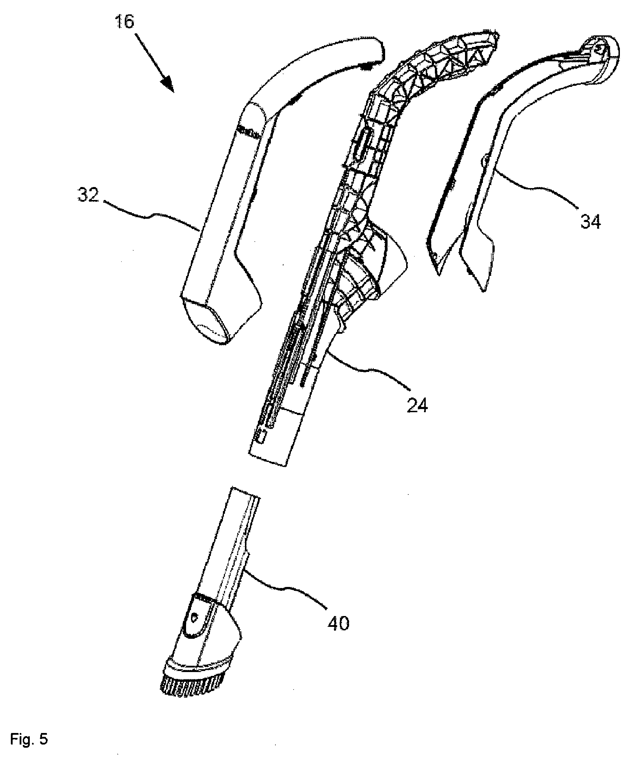

Nicht gezeigt ist in der Darstellung in Figur 2, dass das Kernteil 24 des Handgriffs 16, das zur Vermeidung eines unnötig hohen Gewichts sowie zum Erreichen einer ausreichenden Festigkeit mit fachwerkartigen Rippen und Versteifungen ausgeführt ist, außen mittels üblicherweise zweier Abdeckschalen 32, 34 (Fig. 4, 5; vordere Abdeckschale 32, hintere Abdeckschale 34) abgedeckt ist. Mittels der Abdeckschalen 32, 34 ergibt sich eine ergonomische Oberfläche des Handgriffs 16.

Anhand der Teil-Explosionsdarstellung in Figur 2 ergibt sich, dass die innerhalb des Handgriffs 16 als elektrischer Leiter 22 fungierende Komponente eine durchaus komplexe Struktur aufweisen und sich damit in unterschiedliche Oberflächenabschnitte des Kernteils 24 erstrecken kann. Auf diese Weise kann der Leiter 22 zum Beispiel um den Anschlussbereich 28 herumgeführt werden. Darüber hinaus weist der Leiter 22 in einem zur Anbringung im Griffbereich 26 bestimmten Abschnitt einzelne Abstellungen 36, 37, 38 auf, die bei einem fertig montierten Handgriff 16 mit der hier durch die hintere Abdeckschale 34 gebildeten Oberfläche fluchten. Dabei meint "fluchten", dass sich für einen Verwender des Staubsaugers beim Anfassen im Griffbereich 26 eine angenehme Haptik ergibt, die Abstellungen 36-38 also nicht merklich über die Oberfläche der Abdeckschale 34 hinausragen, und dass gleichzeitig ein elektrisch leitender Kontakt zwischen der Hand des Verwenders und zumindest einer Oberfläche einer Abstellung 36-38 entsteht und die Abstellungen 36-38 dementsprechend nicht hinter die Oberfläche der Abdeckschale 34 zurücktreten.

Das Kernteil 24 des Handgriffs 16 ist ein in Kunststoff ausgeführtes Spritzgussteil. Der verwendete Kunststoff ist elektrisch nicht leitfähig. Der in der Teil-Explosionsdarstellung gemäß Figur 2 als eigenständige Komponente gezeigte Leiter 22 ist ebenfalls ein Spritzgussteil. Das zur Bildung des Leiters 22 verwendete Material ist elektrisch leitfähig und wird beim Spritzgießen unlösbar mit dem zuvor gefertigten Kernteil 24 verbunden. Die Fertigung des Handgriffs 16 umfasst also zumindest einen ersten Verfahrensschritt, in dem durch Spritzgießen das Kernteil 24 gebildet wird, und einen anschließenden zweiten Verfahrensschritt, in dem durch Spritzgießen der Leiter 22 gebildet und im selben Verfahrensschritt mit dem Kernteil 24 verbunden wird. Dadurch, dass der Leiter 22 durch das Spritzgießen mit dem Kernteil 24 verbunden wird, entfällt der bisher bei der Anbringung eines Drahtbügels erforderliche zusätzliche Arbeitsschritt und zudem ist durch die so erreichte Verbindung des Leiters 22 mit dem Kernteil 24 gewährleistet, dass der Leiter 22 sich nicht vom Kernteil 24 löst.

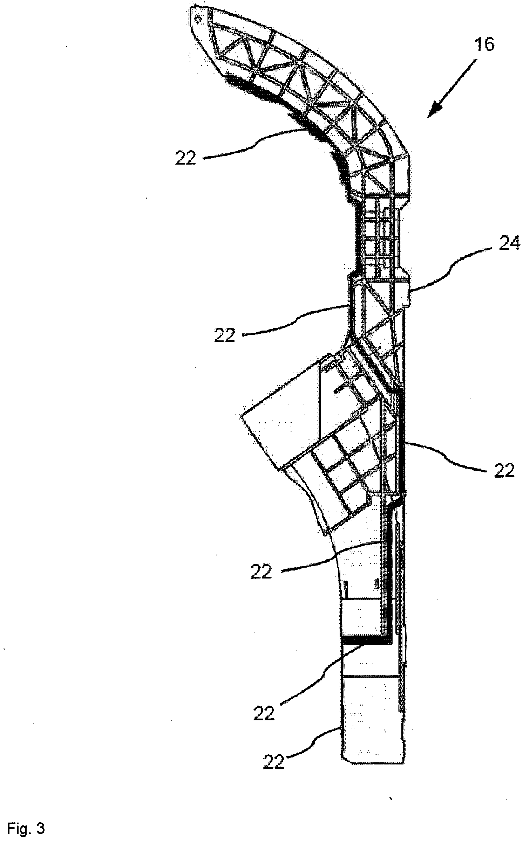

Die Darstellung in Figur 3 zeigt den Leiter 22 in einer am Kernteil 24 angebrachten Konfiguration. Zur besseren Übersichtlichkeit der Darstellung ist neben dem Kernteil 24 nur der Leiter 22 selbst bezeichnet. Auf diese Weise soll der komplexe Verlauf des Leiters 22 entlang des Kernteils 24 illustriert werden.

Die Darstellung in Figur 4 zeigt den Handgriff 16 mit am Kernteil 24 angebrachten Abdeckschalen 32, 34. Der mit dem Kernteil 24 verbundene Leiter 22 befindet sich in dem zum Verbinden des Handgriffs 16 mit dem Saugrohr 20 bestimmten Kontaktbereich 30 an der Oberfläche des Kernteils 24 und tritt im Griffbereich 26 in Form der am Leiter 22 gebildeten Abstellungen 36-38 an die dort mittels der Abdeckschalen 32, 34 gebildete Oberfläche des Handgriffs 16.

Die Teil-Explosionsdarstellung in Figur 5 zeigt abschließend, dass der Handgriff 16 auch eine am Kernteil 24 beweglich, nämlich translatorisch beweglich angebrachte Bürste 40 umfassen kann. Besonders hinzuweisen ist aber auf die Darstellung der beiden Abdeckschalen 32, 34 und die dabei erkennbare Geometrie der hinteren Abdeckschale 34. Die hintere Abdeckschale 34 umgreift das Kernteil 24 halbkreisförmig und weist in ihrer Oberfläche nur eine der Anzahl der Abstellungen 36-38 entsprechende Anzahl von Öffnungen zum Durchtritt der Abstellungen 36-38 auf (vgl. Fig. 4). Dadurch ist eine ausreichende Stabilität der hinteren Abdeckschale 34 gewährleistet. Der Verwender des Staubsaugers 10 berührt beim Anfassen des Handgriffs 16 im Griffbereich 26 die Oberflächen der Abstellungen 36-38 des Leiters 22, so dass ein elektrisch leitender Kontakt bis zum Saugrohr 20 und von dort bis zur Bodendüse 18 hergestellt ist. Im Falle einer elektrostatischen Aufladung erfolgt auf diesem Wege ein kontinuierlicher Ladungsabfluss und ein Aufbau einer nennenswerten Potentialdifferenz wird wirksam verhindert.

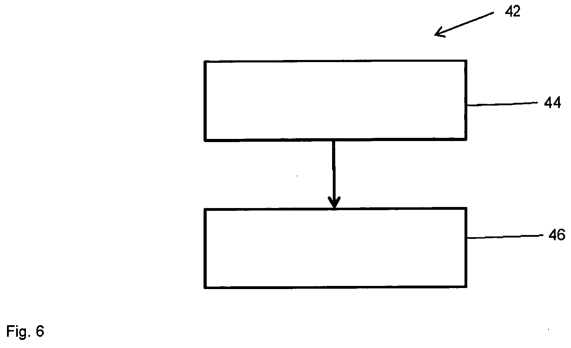

Figur 6 zeigt ein Ablaufdiagramm eines Ausführungsbeispiels eines Verfahrens 42 zum Herstellen eines Handgriffes 16 für einen Staubsauger 10. In einem ersten Schritt des Spritzgussverfahren 44 wird das Kernteil 24 des Handgriffes 16 aus einem nicht leitfähigen Material gespritzt. In einem zweiten Schritt des Spritzgussverfahrens 46 wird ein Leiter 22 aus einem elektrisch leitfähigen Material an das Kernteil angespritzt, sodass das Leiter 22 und Kernteil 24 stoffschlüssig miteinander verbunden sind.

Einzelne im Vordergrund stehende Aspekte der hier vorgelegten Beschreibung lassen sich damit kurz wie folgt zusammenfassen: Angegeben werden ein Handgriff 16 für einen Staubsauger 10, wobei der Handgriff 16 ein aus einem nichtleitenden Kunststoff in einem Spritzgussverfahren gefertigtes Kernteil 24 sowie einem in einem Spritzgussverfahren gefertigten und mit dem Kernteil 24 verbundenen Leiter 22 umfasst, der sich von einem Griffbereich 26 bis zu einem Kontaktbereich 30 des Handgriffs 16 erstreckt, sowie ein Staubsauger 10 mit einem solchen Handgriff 16.

### Bezugszeichenliste

- 10: Staubsauger
- 12: Gerätegehäuse
- 14: Saugschlauch
- 16: Handgriff
- 18: Bodendüse
- 20: Saugrohr
- 22: elektrischer Leiter (im/am Handgriff)
- 24: Kernteil (des Handgriffs)
- 26: Griffbereich (des Handgriffs)
- 28: Anschlussbereich (des Handgriffs)
- 30: Kontaktbereich (des Handgriffs)
- 32: (vordere) Abdeckschale
- 34: (hintere) Abdeckschale
- 36: Abstellung (am Leiter)
- 37: Abstellung (am Leiter)
- 38: Abstellung (am Leiter)
- 40: Bürste
- 42: Herstellungsverfahren
- 44: erster Verfahrensschritt
- 46: zweiter Verfahrensschritt

## Patentansprüche

1. Handgriff (16) für einen Staubsauger (10) mit einem aus einem nichtleitenden Kunststoff in einem Spritzgussverfahren gefertigten Kernteil (24) sowie einem in einem Spritzgussverfahren gefertigten und durch das Spritzgussverfahren mit dem Kernteil (24) verbundenen Leiter (22), der sich von einem Griffbereich (26) bis zu einem Kontaktbereich (30) des Handgriffs (16) erstreckt.

2. Handgriff (16) nach Anspruch 1, wobei der Leiter (22) aus einem elektrisch leitfähigen Kunststoff gefertigt ist.

3. Handgriff (16) nach Anspruch 1 oder 2, wobei der Leiter (22) aus einem farblich vom Kernteil (24) abgesetzten Kunststoff gefertigt ist.

4. Handgriff (16) nach einem der vorangehenden Ansprüche, mit zumindest einer als Außenoberfläche oder abschnittsweise Außenoberfläche des Handgriffs (16) fungierenden und zur Anbringung am Kernteil (24) bestimmten Abdeckschale (34), wobei der Leiter (22) Abstellungen (36-38) zum Durchtritt durch in der Abdeckschale (34) gebildete Öffnungen aufweist und wobei die Abstellungen (36-38) bei einer am Kernteil (24) angebrachten Abdeckschale (34) mit der Außenoberfläche der Abdeckschale (34) fluchten.

5. Staubsauger (10) mit einem Handgriff (16) nach einem der vorangehenden Ansprüche.

6. Herstellungsverfahren (42) zum Herstellen eines Handgriffes (16) für einen Staubsauger (10), wobei das Herstellungsverfahren (42) die folgenden Schritte aufweist:
Spritzgießen (44) eines Kernteiles (24) aus einem nichtleitenden Kunststoff;
Spritzgießen (46) eines Leiters (22) aus einem elektrisch leitfähigen Material an das Kernteil (24), um eine stoffschlüssige Verbindung zwischen Leiter (22) und Kernteil (24) zu bilden.

## Claims

1. Handle (16) for a vacuum cleaner (10), comprising a core part (24) manufactured in an injection moulding process from a non-conductive plastics material, and comprising a conductor (22) that is manufactured in an injection moulding process, is connected to the core part (24) by the injection moulding process, and that extends from a handle region (26) as far as a contact region (30) of the handle (16).

2. Handle (16) according to claim 1, wherein the conductor (22) is manufactured from an electrically conductive plastics material.

3. Handle (16) according to either claim 1 or claim 2, wherein the conductor (22) is manufactured from a plastics material in a contrasting colour to the core part (24).

4. Handle (16) according to any of the preceding claims, comprising at least one covering shell (34) that is intended to be attached to the core part (24) and functions as an outer surface or as portions of an outer surface of the handle (16), wherein the conductor (22) comprises stops (36-38) for passing through openings formed in the covering shell (34) and wherein the stops (36-38) align with the outer surface of the covering shell (34) in a covering shell (34) that is attached to the core part (24).

5. Vacuum cleaner (10) comprising a handle (16) according to any of the preceding claims.

6. Production method (42) for producing a handle (16) for a vacuum cleaner (10), wherein the production method (42) comprises the following steps:
injection moulding (44) a core part (24) from a non-conductive plastics material;
injection moulding (46) a conductor (22), made of an electrically conductive material, to the core part (24) in order to form an integral bond between the conductor (22) and the core part (24).

## Revendications

1. Poignée (16) pour un aspirateur (10) avec une partie de noyau (24) réalisée en matière plastique non conducteur dans un procédé de moulage par injection ainsi qu'avec un conducteur (22), réalisé dans un procédé de moulage par injection et raccordé à la partie de noyau (24) par le procédé de moulage par injection, qui s'étend d'une zone de préhension (26) jusqu'à une zone de contact (30) de la poignée (16).

2. Poignée (16) selon la revendication 1, dans laquelle le conducteur (22) est réalisé dans une matière plastique électriquement conductrice.

3. Poignée (16) selon la revendication 1 ou 2, dans laquelle le conducteur (22) est réalisé en matière plastique qui se distingue de la partie de noyau (24) par sa couleur.

4. Poignée (16) selon l'une des revendications précédentes, avec au moins une coque de recouvrement (34) fonctionnant en tant que surface extérieure ou par tronçons en tant que surface extérieure de la poignée (16) et destinée à être mise en place sur la partie de noyau (24), dans laquelle le conducteur (22) présente des arrêts (36-38) pour le passage à travers des ouvertures formées dans la coque de recouvrement (34) et dans laquelle les arrêts (36-38) affleurent la surface extérieure de la coque de recouvrement (34) dans le cas d'une coque de recouvrement (34) mise en place sur la partie de noyau (24).

5. Aspirateur (10) avec une poignée (16) selon l'une des revendications précédentes.

6. Procédé de fabrication (42) pour la fabrication d'une poignée (16) pour un aspirateur (10), dans lequel le procédé de fabrication (42) présente les étapes suivantes :
moulage par injection (44) d'une partie de noyau (24) en matière plastique non conductrice ;
moulage par injection (46) d'un conducteur (22) en matériau électriquement conducteur sur la partie de noyau (24) afin de former un raccordement par liaison de matière entre le conducteur (22) et la partie de noyau (24).
